# FASCICULE DE BREVET EUROPEEN

(11) **EP 1 324 563 B1**
(45) Date de publication et mention de la délivrance du brevet: **12.10.2005**
(21) Numéro de dépôt: 02102702.4
(22) Date de dépôt: 06.12.2002
(51) Int. Cl.: H04L 29/06

(54) **Procédé de sécurisation déportée d'échange de données**
Offset Sicherheitsverfahren zum Datenaustausch
Offset security method for data exchange

(30) Priorité: 31.12.2001 FR 0117096
(43) Date de publication de la demande: 02.07.2003
(73) Titulaire: Société Française du Radiotéléphone-SFR, 75008 Paris (FR)
(72) Inventeur: Bouthors, Nicolas, 38240 Meylan (FR)
(74) Mandataire: Schmit, Christian Norbert Marie

(56) Documents cités:
- WO-A-01/07979
- WO-A-99/35801
- US-A- 5 889 943

## Description

La présente invention a pour objet un procédé de sécurisation déportée d'échange de données. Le domaine de l'invention est celui des réseaux dans lesquels il est possible d'accéder à des données de natures diverses via un terminal, cet accès étant subordonné à la souscription d'un abonnement auprès d'un fournisseur d'accès. De tels réseaux sont, par exemple, le réseau Internet pour les particuliers, ou les réseaux de téléphonie mobile. Pour accéder à des données et à ces réseaux, un utilisateur d'un terminal permettant de se connecter à ces réseaux doit souscrire un abonnement.

WO99/35801 décrit un système contrôlant l'accès de messages diffusés reçus par une pluralité de dispositifs mobiles. Les dispositifs mobiles sélectionnés disposent d'une clé de codage de diffusion. Les messages diffusés sont codés avant leur transmission utilisant cette même clé de telle manière que les dispositifs mobiles sélectionnés les recevant et seulement ceux disposant de la clé puissent décoder ces messages et les retransmettre à leur tour.

Un but de l'invention est de renforcer la confiance des utilisateurs en de tels réseaux. Un autre but de l'invention est de minimiser l'impact, sur les utilisateurs finaux, des procédures de sécurisation.

Dans l'état de la technique on connaît des systèmes permettant de recevoir sur un appareil, par exemple un ordinateur personnel, des contenus, ou données, dits actifs, ou actives. Un contenu est dit actif lorsque son interprétation met en oeuvre des capacités de l'appareil, sur lequel il est interprété, autre que ses capacités d'affichage. Les capacités d'un appareil sont, en dehors de ces capacités d'affichage et par exemple, des capacités de communication, des capacités de stockage, et des capacités de traitement.

Dans l'état de la technique, et dans le domaine des ordinateurs personnels, il existe au moins deux principaux types de contenu actif. Il existe des contenus actifs acceptés par défauts, par exemple des scripts, des "applets" de type java, et des contenus actifs dont le téléchargement et la mise en oeuvre sont soumis à une autorisation de l'utilisateur de l'appareil. Ces derniers contenus actifs sont connus sous le nom de "plug-in", ou extension, d'une application de navigation. Lors du téléchargement d'une telle extension l'utilisateur se voit demander si il accepte ladite extension. Pour faciliter son choix ladite extension est accompagnée d'un certificat lui permettant d'identifier l'organisme, ou le prestataire, émettant l'extension. Une telle extension permet d'accroître le contrôle, par exemple d'un logiciel de navigation, sur l'appareil utilisé pour la mise en oeuvre de ce logiciel.

Les deux types de contenus actifs précités arrivent sur un appareil d'un utilisateur suite à une sollicitation effectuée par cet utilisateur. C'est-à-dire qu'un utilisateur a émis une requête, par exemple selon le protocole HTTP, pour recevoir une page web, donc un fichier au format HTML. Ce fichier au format HTML comporte alors ces contenus actifs qui sont interprétés par le logiciel de navigation.

Un premier problème apparaît déjà en ce que la manipulation des certificats, accompagnant les extensions, n'est pas naturelle pour un utilisateur. Ainsi, le logiciel de navigation pose la question de savoir si l'utilisateur accepte l'extension qui a été émise par tel ou tel organisme. La plupart du temps l'utilisateur ne comprend pas le "jargon" accompagnant cette question et ne cherche pas à vérifier la validité du certificat. Dès lors il est possible pour des personnes malveillantes de se faire passer pour un organisme ayant une réputation bienveillante, ou tout simplement de ce donner les apparences de la bienveillance. Ainsi l'utilisateur averti préférera, la plupart du temps, refuser les extensions plutôt que de courir le moindre risque. Par là même, dans un souci de précaution, l'utilisateur limite les prestations auxquelles il pourrait avoir accès si il existait un système lui permettant d'avoir une confiance plus importante dans le mode de diffusion desdites extensions.

Ce problème existe aussi dans le monde de la téléphonie mobile. On rappelle qu'il est en effet possible d'accéder à internet, donc à des contenus actifs tels que précités, avec un téléphone mobile. Cependant ce problème est encore plus aigu car, dans la téléphonie mobile, il existe un mode dit "push". Cela signifie que l'utilisateur d'un terminal de téléphonie mobile est susceptible de recevoir des contenus actifs sans en avoir solliciter la réception. L'existence d'un tel mode de fonctionnement trouve son fondement dans le fait qu'il faille, pour les terminaux mobiles, économiser l'énergie. Il est donc coûteux, pour un terminal mobile, d'avoir à interroger régulièrement des serveurs dans le cadre, par exemple, d'une application de messagerie. Il est beaucoup plus simple que le serveur de messagerie envoie un message vers le terminal mobile lorsqu'un message lui est destiné.

De plus les capacités de contrôle d'un appareil, de type terminal mobile, par des scripts ou des "applets" compatibles avec ce terminal mobile sont bien plus étendues que dans le domaine des ordinateurs personnels. Il faut donc être très méfiant dans la manipulation de ces contenus actifs dans un terminal mobile, d'ailleurs, un utilisateur prudent, les refuse de manière systématique.

Un autre problème existant avec les terminaux mobiles est à la fois, leur faible capacité de stockage, et leur puissance de calcul réduite. Cela ne permet pas, d'une part, le stockage d'une base de données de certificats, d'autre part, l'exploitation en temps réel de cette base de données de certificats. Une solution calquée sur celle existant dans le domaine des ordinateurs personnels n'est donc pas applicable dans le domaine de la téléphonie mobile. De plus une telle solution, si elle était réalisée ne serait pas ergonomique car elle solliciterait, tout comme dans le domaine des ordinateurs personnels, l'utilisateur du terminal. Cela n'est donc pas optimal.

Un autre problème se pose du coté du prestataire. Il peut arriver, en effet, que le prestataire souhaite obtenir des garanties sur la validité d'une requête, ou d'une réponse à une requête émise par un abonné. Dans l'état de la technique cela se fait par la mise en oeuvre, par l'abonné, de signatures et de certificats comme peut le faire le prestataire pour garantir ses données. L'abonné doit donc mettre en oeuvre des technologies lourdes de certification sur son terminal, et le prestataire doit se doter des moyens de vérifier les garanties présentées par l'abonné. Dans la mesure où un prestataire reçoit un grand nombre de sollicitations, la multiplication des opérations de vérification, ainsi que leur complexité, posent un problème en terme de temps de réponse qui décourage l'abonné, et le dissuade de refaire appel au prestataire.

L'invention résout ces problèmes en minimisant la charge de travail, pour un abonné et un prestataire, liée à une vérification au minimum. Ainsi l'opérateur recevant un message se charge de vérifier son adéquation avec des règles liées à l'opérateur, à l'émetteur du message, et au destinataire du message. Si ces règles sont respectées, alors l'opérateur retransmet le message, sinon il interrompt la transmission du message, et, éventuellement, informe l'émetteur que son message ne satisfait pas aux conditions de retransmission. L'opérateur effectue ainsi des vérifications de signatures, de certificat, de format et de contenu de message. Ces vérifications sont passées avec succès, l'opérateur marque le message avant de le retransmettre. Lorsque le destinataire reçoit le message, il n'a qu'à vérifier la marque apposée par l'opérateur pour savoir si le message que le destinataire vient de recevoir satisfait aux conditions qu'il, le destinataire, a prescrite à l'opérateur. Ainsi, vu par un abonné et un prestataire, la vérification d'un message se limite au test d'une marque apposée par un opérateur.

L'invention a donc pour objet un procédé de sécurisation déportée d'un échange de données entre un abonné, à un opérateur de télécommunication, et un prestataire, agissant sur un réseau de télécommunication géré par l'opérateur, caractérisé en ce que l'opérateur met en oeuvre les étapes suivantes :
- réception d'un message,
- identification de l'émetteur du message,
- identification du destinataire du message,
- détermination de règles à appliquer au message,
- application au message de règles pour déterminer si le message doit être retransmis,
- marquage du message,
- retransmission, vers le destinataire, du message marqué et conforme aux règles.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration de moyens utiles à la mise en oeuvre du procédé selon invention ;
- Figure 2 : une illustration d'étapes du procédé selon l'invention ;

Dans la description qui suit, il est question d'opérateur, d'abonné, et de prestataire. Tous agissent sur un ou plusieurs réseaux. L'abonné utilise un terminal de téléphonie mobile pour communiquer avec des appareils gérés par l'opérateur. Le prestataire possède un serveur lui permettant de communiquer avec des appareils de l'opérateur. Dans la description on prête des actions au terminal, à l'abonné, à l'opérateur et au prestataire. Il est bien entendu que ces actions sont effectuées par des appareils correspondant à ces différentes entités. Ainsi une action effectuée par l'abonné est réalisée via son terminal et le microprocesseur que comporte ce terminal. Ce microprocesseur est commandé par des codes instructions enregistrés dans une mémoire du terminal. Il en va de même pour les serveurs des opérateurs et prestataires. Chaque serveur comporte un microprocesseur et une mémoire de programme comportant des codes instructions pour commander ces microprocesseurs.

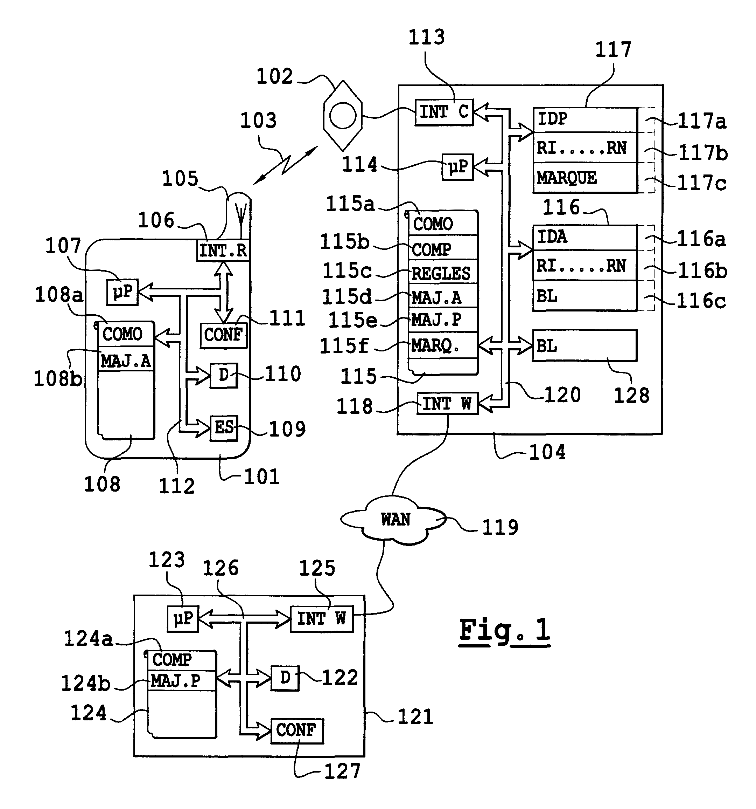

La figure 1 montre un terminal 101 connecté à un réseau 102 de télécommunication via une liaison 103 hertzienne. Pour les besoins de la description, et dans un mode de réalisation préféré, on considère que le réseau 102 est un réseau cellulaire de téléphonie mobile, et que le terminal 101 est donc un téléphone mobile. Le réseau 102 est géré par un opérateur de téléphonie mobile via des serveurs connectés à ce réseau 102. La figure 1 montre un tel serveur 104.

Le terminal 101 comporte une interface de communication lui permettant d'établir la liaison 103 avec le réseau 102. Cette interface de communication est composée d'une antenne 105 et de circuits 106 interface radio assurant le transcodage entre des signaux analogiques existant du côté de l'antenne 105 et des signaux numériques existant dans le terminal 101. De manière classique le terminal 101 comporte un microprocesseur 107, une mémoire 108 de programme, et des moyens 109 d'entrées/sorties. Les moyens 109 sont, entre autres, un clavier et un écran.

Le terminal 101 comporte aussi une mémoire 110 de données. C'est dans cette mémoire que sont enregistrées les données reçues par le terminal 101. Une mémoire 111, du terminal 101, permet d'enregistrer la configuration de ce terminal, et en particulier permet d'enregistrer quel doit être le comportement du serveur 104 en fonction des messages reçus par le serveur 104, ces messages étant destinés à l'utilisateur du terminal 101.

La mémoire 108 comporte plusieurs zones. En particulier la mémoire 108 comporte une zone 108a comportant des codes instructions commandant le micro processeur 107 lorsque le terminal 101 communique avec le serveur 104, c'est-à-dire lorsque le téléphone 101 communique avec l'opérateur. Le terminal 101 comporte une zone 108b correspondant à une mise à jour de la configuration de l'abonné au niveau du serveur 104.

Pour le terminal 101, comme pour les autres appareils dont la description est à venir, on décrit un certain nombre de mémoires. Pour un appareil donné, l'ensemble de ces mémoires, peuvent très bien n'être que plusieurs zones d'une seule et même mémoire. La représentation en éléments éclatés simplifie la compréhension.

Les éléments 106 à 111 sont connectés par un bus 112. Le réseau 102, et donc le terminal 101, fonctionnent selon l'une quelconque des normes de téléphonie mobile existantes ou à venir. Parmi ces normes on peut citer, pour exemple, le GSM, le PCS, le DCS, le GPRS et l'UMTS.

Le serveur 104 de l'opérateur comporte des circuits 113 lui permettant d'établir une interface entre le réseau 102 et le serveur 104. Le serveur 104 comporte un microprocesseur 114 ainsi qu'une mémoire 115 de programme. La mémoire 115 est divisée en plusieurs zones comportant des codes instructions commandant le microprocesseur 114 selon les circonstances. Une zone 115a permet au serveur 104 de communiquer avec le terminal 101, une zone 115b permet au serveur 104 de communiquer avec un prestataire souhaitant agir sur le réseau 102 de l'opérateur. Une zone 115c permet au serveur 104 de déterminer, et d'appliquer, les règles pertinentes par rapport aux messages reçus par le serveur 104. Une zone 115d permet au serveur 104 d'effectuer la mise à jour d'une table 116 d'abonnés à l'opérateur. Une zone 115e permet au serveur 104 d'effectuer la mise à jour d'une table 117 de prestataires agissant sur le réseau de l'opérateur. Une zone 115f permet au serveur 104 d'effectuer le marquage des messages retransmis.

Le serveur 104 comporte aussi une table 117 de prestataires. Le terminal 104 comporte aussi des circuits 118 interface entre le serveur 104 et un réseau 119 de télécommunication, par exemple le réseau Internet. Les éléments 113 à 118, et 128, sont connectés à un bus 120.

Les tables 116 et 117 sont des mémoires structurées en table. Chaque ligne correspond à une information, chaque colonne correspond à un enregistrement, c'est-à-dire à un abonné pour la table 116, et à un prestataire pour la table 117. La table 116 permet donc d'enregistrer des informations sur des abonnés à l'opérateur, et la table 117 permet donc d'enregistrer des informations sur des prestataires souhaitant agir sur le réseau de l'opérateur gérant le serveur 104.

La table 117 comporte une ligne 117a correspondant à un identifiant du prestataire. Une ligne 117b correspond à une liste de règles sur lesquelles se sont entendues l'opérateur gérant le serveur 104, et le prestataire identifié par la ligne 117a. Une ligne 117c correspond à une liste de marques sur lesquelles se sont entendues l'opérateur gérant le serveur 104, et le prestataire identifié par la ligne 117a, chaque marque pouvant avoir une signification, par exemple, message satisfaisant, ou message non satisfaisant.

La table 116 comporte une ligne 116a pour y enregistrer un identifiant de l'abonné. Dans le cas d'un réseau de téléphonie mobile, l'identifiant de la ligne 116a est, par exemple, un numéro de téléphone, ou un numéro de carte SIM. La table 116 comporte aussi une ligne 116b correspondant à une liste de règles définissant les caractéristiques des messages que peut, ou souhaite, recevoir l'abonné identifié par la ligne 116a. Une ligne 116c correspond à une liste noire. Chaque abonnée a la possibilité de désigner des prestataires, ou émetteurs de message, de la part desquels ils ne souhaite plus recevoir de message. Cette liste est enregistrée dans la ligne 116c à la colonne correspondant à l'identifiant de l'abonné. Cette liste noire comporte, par exemple, des identifiants du type de ceux de la ligne 117a.

Le serveur 104 comporte aussi une mémoire 128 liste noire de l'opérateur. Cette liste 128 noire est celle de l'opérateur. La liste 128 noire comporte, par exemple, la liste des prestataires, c'est-à-dire une liste d'identifiants, n'étant pas autorisés à agir sur le réseau de l'opérateur.

La figure 1 montre aussi un serveur 121 correspondant à un appareil d'un prestataire souhaitant agir sur le réseau 102 de l'opérateur gérant le serveur 104. Pour la description, on considère que le prestataire, ou serveur, 121 souhaite transférer des données enregistrées dans une mémoire 122 au terminal 101. Le serveur 121 comporte un microprocesseur 123, une mémoire de programme 124, et des circuits 125 interface de communication avec le réseau 119. Le serveur 121 comporte aussi, de manière optionnelle, une mémoire 127 de configuration pour l'édition des règles correspondant au prestataire utilisant le serveur 121. Les éléments 122 à 126 sont connectés par un bus 127. La mémoire 124 comporte une zone 124a permettant de mettre en oeuvre des fonctions de communication avec le serveur 104 de l'opérateur. La mémoire 124 comporte une zone 124b permettant de mettre en oeuvre des fonctions de mise à jour de la table 117 en fonction du contenu de la mémoire 126 de configuration du serveur 121.

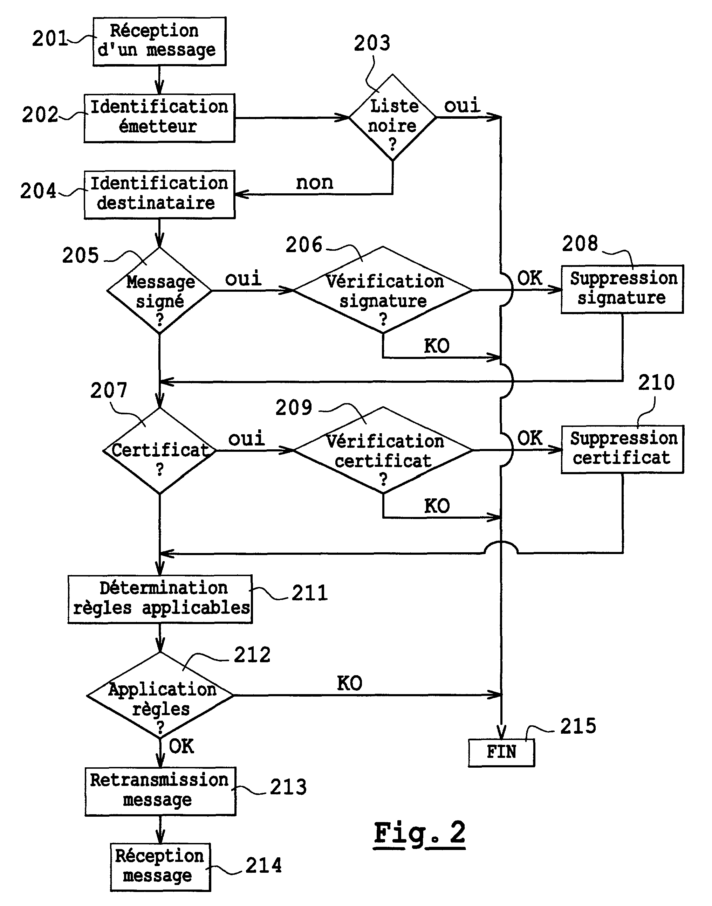

L'ensemble d'éléments décrits pour la figure 1 est mis en oeuvre par le procédé selon l'invention. Des étapes de ce procédé sont illustrées par la figure 2.

La figure 2 montre une étape 201 de réception d'un message par l'opérateur.

On considère dans un premier temps que l'émetteur est un prestataire souhaitant émettre un message à destination d'un abonné au réseau de l'opérateur. Ce message a donc été émis par le serveur 121, mettant en oeuvre le protocole de communication implanté dans la zone 124a de la mémoire 124. Le serveur 104 reçoit ce message grâce au protocole implanté dans la zone 115b de la mémoire 115. Les protocoles des zones 115b et 124a sont identiques, il peut s'agir d'un protocole standard de communication via Internet, par exemple.

On passe alors à une étape 202 d'identification de l'émetteur. Tous les messages échangés à l'heure actuelle sur n'importe quel réseau, comportent un champ permettant d'enregistrer un identifiant de l'émetteur. Lorsque l'émetteur est un prestataire, on considère, par exemple, que ce champ est une adresse de type Internet. L'identification de l'émetteur consiste donc à lire l'adresse Internet de l'émetteur dans le message reçu à l'étape 201. Une fois cette adresse obtenue, on passe à une étape 203 de vérification de la liste noire.

Dans l'étape 203 le serveur 104 parcourt la mémoire 128 à la recherche de l'identifiant qui a été déterminé à l'étape 202. Si cet identifiant est présent dans la liste noire 128, alors on passe à une étape 215 de fin, le message ne sera alors pas acheminé plus loin, c'est-à-dire pas au delà de l'opérateur. Dans ce cas, le serveur 104 interrompt la transmission du message reçu à l'étape 201.

Si l'identifiant déterminé à l'étape 202 n'est pas présent dans la liste 128 noire, alors on passe à une étape 204 d'identification du destinataire. On considère que l'opérateur gérant le serveur 104 est un opérateur de téléphonie mobile. Dans ce cas un identifiant du destinataire est, par exemple, un numéro de téléphone. S'il s'était agi d'un opérateur de fournitures d'accès à Internet, l'identifiant du destinataire aurait pu être, lui aussi, une adresse de type Internet. L'identification du destinataire consiste donc à lire le champ destinataire dans le message reçu à l'étape 201. Une fois l'identifiant du destinataire déterminé, on peut vérifier, que le message reçu à l'étape 201 satisfait bien à toutes les conditions pour être retransmis en direction du terminal identifié par l'identifiant déterminé à l'étape 203.

On passe donc de l'étape 204 à une étape 205 de détermination de la présence d'une signature. Si le message reçu à l'étape 201 comporte une signature on passe alors à une étape 206 de vérification de la signature, sinon on passe à une étape 207 de détermination de la présence d'un certificat dans le message.

Si le message comporte une signature, il s'agit par exemple d'une signature électronique conforme aux décrets français et européen. Une telle signature est produite, et vérifiée, de manière connue. Le mécanisme le plus connu est celui décrit dans les technologies PKI (Public Key Infrastructure, c'est-à-dire infrastructure à clé publique). Dans l'étape 206 on peut cependant mettre en oeuvre n'importe quelle autre technologie de signature sur laquelle se serait entendu l'émetteur et l'opérateur. Si la signature est valide on passe à une étape 208 de suppression de la signature, sinon on passe à l'étape 215.

L'étape 208 est facultative. Dans cette étape l'opérateur modifie le message reçu de manière à supprimer la signature apposée par l'émetteur. Dans la mesure où cette signature a déjà été vérifiée par l'opérateur, il est inutile de la retransmettre. Cela permet d'économiser de la bande passante. Cependant pour des raisons juridiques il peut être souhaitable de transmettre la signature. De l'étape 208 on passe alors à l'étape 207. Dans la mesure où l'étape 208 est facultative, on passe de l'étape 206 à l'étape 207 lorsque la signature est correcte.

Dans l'étape 207 si le message reçu à l'étape 201 comporte un certificat on passe à l'étape 209 de vérification du certificat. Dans l'étape 209 l'opérateur lit le certificat que comporte le message 201 et se connecte à un serveur de l'autorité de certification ayant délivré le certificat, c'est un serveur de certification, accessible via Internet par exemple. Ce serveur de certification renseigne l'opérateur sur le fait que le certificat est répudié ou non. Si le certificat n'est pas répudié, c'est-à-dire s'il est valide, on passe à une étape 210 de suppression du certificat, sinon on passe à l'étape 215.

Comme l'étape 208, l'étape 210 est facultative. Le fait de supprimer le certificat du message reçu à l'étape 201 permet, lors de sa retransmission, d'économiser de la bande passante, c'est-à-dire de transmettre moins d'information et donc d'optimiser le temps de transmission, ainsi que l'espace de sauvegarde, des messages. De l'étape 210 on passe à une étape 211. Si l'étape 210 n'est pas mise en oeuvre, et dans le cas où le certificat est valide, on passe de l'étape 209 à l'étape 211. Si le certificat n'est pas valide, on passe dans tous les cas de figure de l'étape 209 à l'étape 215.

L'opérateur est capable de déterminer si un message comporte une signature, et/ou un certificat, car il s'est préalablement entendu sur le protocole de communication qu'il utilise avec le prestataire. Un protocole de communication définit une structure pour les messages échangés selon ce protocole. Cette structure définie elle-même des champs pour la signature et les certificats. Le fait que ces champs soient renseignés ou non indique donc la présence, ou l'absence, d'une signature, et/ou d'un certificat.

Dans l'étape 211 l'opérateur parcourt la mémoire 117 de prestataires, et plus particulièrement la ligne 117a, à la recherche de l'identifiant déterminé à l'étape 202. Cela permet de trouver une première liste de règles 117b a appliquer au message reçu à l'étape 201.

Ces règles sont spécifiques pour chaque prestataire souhaitant agir sur le réseau 102 de l'opérateur. Ces règles portent, par exemple, sur la nature du message, sur la taille du message, sur le nombre de message qu'un prestataire peut transmettre durant une période donnée etc. La taille du message est facile à déterminer, sa nature peut être codée dans un champ du message reçu à l'étape 201. La plupart du temps, les messages permettent de transmettre des fichiers. Il est alors facile de déterminer la nature d'un fichier. Les fichiers les plus connus sont par exemple, les fichiers exécutables, les fichiers HTML, les fichiers texte etc.

L'ensemble des règles de la ligne 117b a fait l'objet d'une négociation entre l'opérateur et le prestataire identifié par la colonne 117a. Si le message reçu à l'étape 201 satisfait à l'ensemble des règles, pour l'émetteur, de la ligne 117b, alors l'opérateur passe aux règles propres au destinataire du message.

Pour ce faire, l'opérateur, recherche dans la ligne 116a l'identifiant déterminé à l'étape 204. Une fois qu'il l'a trouvé, il lit la ligne 116c correspondant à cet identifiant. La ligne 116c est une liste noire propre à l'opérateur. Le principe de fonctionnement est le même que pour la mémoire 128, à l'étape 203. Pour qu'un message soit valide, il ne faut pas que l'identifiant déterminé à l'étape 202 soit présent dans la liste noire de l'abonné destinataire du message.

Le règles de la ligne 116b, sont identiques à celles définies pour un prestataire, si ce n'est qu'elles sont propres à l'abonné. Un abonné peut souhaiter ne pas recevoir de message supérieur à une certaine taille, ou de message comportant un fichier exécutable, de quelque source que ce soit sur son terminal. Le message reçu à l'étape 201 doit donc passer à travers le crible des règles définies par l'abonné. On détermine les règles de la ligne 116b applicables au message reçu à l'étape 201 de la même manière que pour la ligne 116c, à savoir via l'identifiant déterminé à l'étape 204, et permettant d'identifier un colonne dans la table 116.

L'application de ces règles constitue l'étape 212. Si le message reçu à l'étape 201 ne passe pas à travers le crible de ces règles on passe à l'étape 215. Sinon on passe à une étape 213 de retransmission du message.

Dans l'étape 213 l'opérateur met en oeuvre le protocole implanté dans les zones 115a et 108a pour transmettre le message, reçu à l'étape 201, à son destinataire, c'est-à-dire à un abonné de son réseau. La plupart du temps les protocoles utilisés pour communiquer entre opérateur et prestataire, et entre opérateur et abonné ne sont pas identiques. L'opérateur se charge donc de la conversion de protocole. L'étape 213 consiste donc à récupérer le contenu du message reçu à l'étape 201, hors application des étapes 208 et 210, et à placer ce contenu dans une trame compatible avec le protocole utilisé par l'opérateur pour communiquer avec le destinataire. Il s'agit par exemple d'émettre le contenu via des messages courts (SMS), ou via le protocole WAP (Wireless Application Protocol, ou Protocole d'application sans fil). Dans l'étape 213, avant de retransmettre le message, l'opérateur le modifie, en y ajoutant une marque. Cette marque est ajoutée dans un champ spécifique du message retransmis. On passe alors à une étape 214 de réception du message par le destinataire.

Dans l'étape 214, l'abonné destinataire reçoit un message. La première chose que fait le terminal 101 de l'abonné en recevant le message retransmis est de rechercher le marquage de l'opérateur. Si ce marquage est présent il sait alors qu'il peut avoir une confiance aveugle dans le contenu du message et exécuter toute les actions liées à la nature et au contenu du message qu'il vient de recevoir. Par exemple le message comporte un contenu actif dont l'interprétation entraîne une mise à jour d'une base de données de rendez-vous du terminal 101. Dans la mesure où le message est marqué cette mise à jour se fait sans aucun contrôle de la part de l'utilisateur du terminal 101. Si le message reçu par l'abonné ne comporte pas de marque, l'abonné prend alors sur lui d'accepter, ou de refuser, le message. Ceci signifie que l'abonné, utilisateur du terminal 101, décide explicitement et au cas par cas de traiter de tels messages.

Dans une variante de l'invention un échec aux étapes 206, 209, et 212 ne provoque pas l'interruption de la transmission du message reçu à l'étape 201, mais le non marquage du message, ou l'application d'une marque signifiant que le message ne satisfait pas aux conditions de retransmission. Dans ce cas le destinataire final reçoit le message retransmis, non marqué, ou marqué par une marque indiquant un message ne satisfaisant pas aux exigences des règles. Le terminal, ou serveur, du destinataire ne peut dans ce cas faire confiance au message, il se livre alors à ses propres vérifications et demandera, éventuellement, une intervention de l'abonné, ou prestataire, avant la mise en oeuvre, ou la sauvegarde, du contenu du message.

Les codes instructions de la zone 108b permettent à l'abonné de mettre à jour la colonne de la mémoire 116 le concernant. Pour ce faire, il utilise les éléments 109 pour éditer le contenu de la mémoire 111 de configuration. Une fois cette configuration éditée, elle est retransmise à l'opérateur afin de remplacer le contenu de la colonne de la mémoire 116 concernant l'abonné. Dans une variante, la configuration de l'abonné est sauvegardée sur le serveur 104. Dans ce cas, avant édition, l'abonné doit transférer le contenu de sa configuration du serveur 104 vers la mémoire 111, puis procéder à l'édition et à la mise à jour de la mémoire 116.

La mise à jour des règles et des marques utilisées entre l'opérateur et le prestataire se fait de la même manière que pour l'abonné, si ce n'est que la mémoire de configuration est la mémoire 127 du serveur 121. Dans le cas d'un prestataire, cette mise à jour peut aussi se faire par voie de courrier. C'est-à-dire que le prestataire envoie à l'opérateur une lettre lui indiquant quelles modifications il souhaite apporter à ses règles, et l'opérateur se charge alors de mettre à jour son serveur.

Si l'émetteur du message est un abonné, par exemple dans le cas d'un achat du type télé-achat, le prestataire reçoit alors un message de commande comportant une marque apposée par l'opérateur. Cette marque signifie, soit que les vérifications effectuées par l'opérateur sont bonnes, soit qu'elles sont mauvaises. Si elles sont bonnes, le prestataire sait qu'il peut honorer la commande en toute confiance car l'opérateur s'en porte garant. Dans le cas contraire il peut soit refuser la commande soit procéder à ses propres vérifications avant de décider d'accepter la commande. Le processus est donc symétrique qu'il s'agisse d'un message envoyé par un prestataire à un abonné, ou par un abonné à un prestataire. L'opérateur aura cependant tendance à ne pas supprimer la signature dans le cas d'un message envoyé par un abonné à un prestataire, car un prestataire peut souhaiter conserver les signatures pour des raisons juridiques dans le cas d'une éventuelle contestation de l'abonné sur l'objet de son message.

Dans la mesure où un prestataire est soit émetteur, soit destinataire d'un message, il peut être souhaitable, dans une variante, de distinguer les règles à appliquer selon le cas. Ainsi, dans cette variante, les règles de la ligne 117b comportent chacune un champ supplémentaire correspondant à leur pertinence par rapport à la situation du prestataire. Cela permet de discriminer, à l'étape 211, selon que le prestataire est émetteur ou destinataire, quelles sont les règles applicables parmi celles correspondant au prestataire. Cette remarque, sur les règles, est aussi valable pour les règles des abonnées, ils peuvent en effet eux aussi être soit émetteur, soit destinataire.

Le procédé décrit peut être mis en oeuvre sur tout type de réseau faisant intervenir un opérateur, des abonnés et des prestataires. Les réseaux cellulaires de téléphonie mobile font partie de ces réseaux, mais aussi l'Internet pour les particuliers. En effet, chaque personne souhaitant se connecter à Internet doit passer par un fournisseur d'accès à Internet (FAI). Les serveurs du FAI peuvent alors mettre en oeuvre le procédé. Cela permet de simplifier la configuration des terminaux utilisés par les abonnés, cela permet aussi aux utilisateurs des terminaux de ne plus avoir à s'interroger sur les tenants et les aboutissants des messages que peuvent présenter les terminaux lorsque l'opérateur ne se charge pas de la sécurisation des messages qu'ils reçoivent.

Dans un souci de clarté, on a choisi de représenter les règles dans deux tables distinctes 116 et 117. Dans la pratique toutes les règles pourraient être dans une seule et même table, l'étape 211 extrayant de cette table les règles applicables à un message reçu par l'opérateur. Une règle a donc au moins les caractéristiques suivantes: identifiant d'émetteur, identifiant de destinataire, et une condition sur une propriété du message. Une propriété d'un message peut être sa taille, sa nature relativement à son contenu, ou un champ binaire dans lequel chaque bit aurait une signification. A la réception d'un message on détermine donc ses propriétés via une mesure ou la lecture d'un champ propriété du message. Il est alors aisé de déterminer les règles pertinentes et de les appliquer.

Les marques utilisées par l'opérateur pour marquer les messages retransmis sont connues des seuls intéressés au procédé. Une marque est de préférence un mot binaire ayant une signification pour le destinataire. Cette signification a été décidée conjointement avec l'opérateur. Le test de la valeur d'une marque renseigne donc sur la validité d'un message. Les marques utilisées peuvent être variables dans le temps, de manière prédéterminée, ou sur l'initiative de l'un des acteurs du procédé.

## Revendications

1. Procédé de sécurisation déportée d'un échange de données entre un abonné à un opérateur de télécommunication, et un prestataire agissant sur un réseau de télécommunication géré par l'opérateur **caractérisé en ce que** l'opérateur met en oeuvre les étapes suivantes :
- réception (201) d'un message,
- identification (202) de l'émetteur du message,
- identification (204) du destinataire du message,
- détermination (211) de règles à appliquer au message,
- application (212) au message de règles pour déterminer si le message doit être retransmis,
- marquage (213) du message,
- retransmission (213), vers le destinataire, du message marqué et conforme aux règles,
- vérification (214) du message par le destinataire, pour accepter ou non le message, par simple vérification de la présence et la validité du marquage.

2. Procédé selon la des revendication 1 **caractérisé en ce que** le message est signé par son émetteur, la validité de la signature, condition supplémentaire à sa retransmission, étant vérifiée (206) par l'opérateur.

3. Procédé selon l'une des revendications 1 à 2, **caractérisé en ce que** le message est accompagné par un certificat, l'opérateur vérifie (209) la validité du certificat comme condition supplémentaire à sa retransmission.

4. Procédé selon l'une des revendications 1 à 3, **caractérisé en ce que** l'application des règles comporte (203) la vérification de la non appartenance à une liste noire d'identifiants d'émetteurs définie par le destinataire.

5. Procédé selon la revendication 4, **caractérisé en ce que** la liste noire est sauvegardée par l'opérateur.

6. Procédé selon l'une des revendications 1 à 5, **caractérisé en ce que** l'application des règles comporte la vérification de la taille du message.

7. Procédé selon l'une des revendications 1 à 6, **caractérisé en ce que** l'application des règles comporte une vérification de la nature du message.

8. Procédé selon l'une des revendications 1 à 7, **caractérisé en ce que** l'application des règles comporte le contrôle de la fréquence des messages pour un destinataire ou un émetteur.

9. Procédé selon l'une des revendications 1 à 8, **caractérisé en ce que** pour un message signé par l'émetteur, l'opérateur supprime (208) la signature de l'émetteur du message.

10. Procédé selon l'une des revendications 1 à 9, **caractérisé en ce que** pour un message comportant un certificat, l'opérateur supprime (210) le certificat du message.

## Patentansprüche

1. Offset Sicherheitsverfahren zum Datenaustausch zwischen einem Teilnehmer bei einem Telekommunikationsnetzbetreiber und einem Provider, der auf einem Telekommunikationsnetz agiert, das von dem Betreiber verwaltet wird, **dadurch gekennzeichnet, dass** der Betreiber die folgenden Schritte ausführt:
- Empfang (201) einer Mitteilung,
- Identifizierung (202) des Senders der Mitteilung,
- Identifizierung (204) des Empfängers der Mitteilung,
- Ermittlung (211) von auf die Mitteilung anzuwendender Regeln,
- Anwendung (212) von Regeln auf die Mitteilung, um festzustellen, ob die Mitteilung weitergeleitet werden muss,
- Markierung (213) der Mitteilung,
- Weiterleitung (213) der markierten und regelkonformen Mitteilung an den Empfänger,
- Überprüfung (214) der Mitteilung durch den Empfänger, ob die Mitteilung angenommen wird oder nicht, durch einfache Überprüfung des Vorhandenseins und der Gültigkeit der Markierung.

2. Verfahren nach Anspruch 1, **dadurch gekennzeichnet, dass** die Mitteilung von ihrem Sender signiert wird, wobei die Gültigkeit der Signatur als zusätzliche Bedingung für die Weiterleitung der ersteren von dem Betreiber überprüft wird (206).

3. Verfahren nach einem der Ansprüche 1 bis 2, **dadurch gekennzeichnet, dass** die Mitteilung mit einem Zertifikat versehen ist und der Betreiber die Gültigkeit des Zertifikats als zusätzliche Bedingung für die Weiterleitung der Mitteilung überprüft (209).

4. Verfahren nach einem der Ansprüche 1 bis 3, **dadurch gekennzeichnet, dass** die Anwendung der Regeln die Überprüfung der Nicht-Zugehörigkeit zu einer schwarzen Liste von Sender-Identifikationen umfasst (203), die von dem Empfänger festgelegt wird.

5. Verfahren nach Anspruch 4, **dadurch gekennzeichnet, dass** die schwarze Liste von dem Betreiber gespeichert wird:

6. Verfahren nach einem der Ansprüche 1 bis 5, **dadurch gekennzeichnet, dass** die Anwendung der Regeln die Überprüfung der Größe der Mitteilung umfasst.

7. Verfahren nach einem der Ansprüche 1 bis 6, **dadurch gekennzeichnet, dass** die Anwendung der Regeln eine Überprüfung der Art der Mitteilung umfasst.

8. Verfahren nach einem der Ansprüche 1 bis 7, **dadurch gekennzeichnet, dass** die Anwendung der Regeln die Kontrolle der Häufigkeit der Mitteilungen für einen Empfänger oder einen Sender umfasst.

9. Verfahren nach einem der Ansprüche 1 bis 8, **dadurch gekennzeichnet, dass** bei einer vom Sender signierten Mitteilung der Betreiber die Signatur des Senders der Mitteilung entfernt (208).

10. Verfahren nach einem der Ansprüche 1 bis 9, **dadurch gekennzeichnet, dass** bei einer Mitteilung, die ein Zertifikat aufweist, der Betreiber das Zertifikat der Mitteilung entfernt (210).

## Claims

1. Process for remotely securing an exchange of data between a subscriber to a telecommunications operator and a service provider active on a telecommunications network managed by the operator, **characterised by** the fact that the operator implements the following steps:
- reception (201) of a message,
- identification (202) of the sender of the message,
- identification (204) of the recipient of the message,
- determination (211) of rules to be applied to the message,
- application (212) of rules to the message to determine whether the message must be retransmitted,
- tagging (213) of the message,
- retransmission (213), to the recipient, of the tagged message conforming to the rules,
- verification (214) of the message by the recipient, to accept the message or otherwise, by simple verification of the presence and validity of the tagging.

2. Process as described in claim 1, **characterised by** the fact that the message is signed by its sender, the validity of the signature, an additional condition for its retransmission, being verified (206) by the operator.

3. Process as described in one of claims 1 to 2, **characterised by** the fact that the message is accompanied by a certificate, the operator verifies (209) the validity of the certificate as an additional condition for its retransmission.

4. Process as described in one of claims 1 to 3, **characterised by** the fact that the application of the rules includes (203) verification of non-membership of a black list of identifiers of senders defined by the recipient.

5. Process as described in claim 4, **characterised by** the fact that the black list is stored by the operator.

6. Process as described in one of claims 1 to 5, **characterised by** the fact that the application of the rules includes verification of the size of the message.

7. Process as described in one of claims 1 to 6, **characterised by** the fact that the application of the rules includes verification of the nature of the message.

8. Process as described in one of claims 1 to 7, **characterised by** the fact that the application of the rules includes controlling the frequency of the messages for a recipient or a sender.

9. Process as described in one of claims 1 to 8, **characterised by** the fact that for a message signed by the sender, the operator removes (208) the signature of the sender of the message.

10. Process as described in one of claims 1 to 9, **characterised by** the fact that for a message including a certificate, the operator removes (210) the certificate of the message.
